# EUROPÄISCHE PATENTSCHRIFT

(11) **EP 3 158 007 B1**
(45) Veröffentlichungstag und Bekanntmachung des Hinweises auf die Patenterteilung: **06.04.2022**
(21) Anmeldenummer: 15730483.3
(22) Anmeldetag: 17.06.2015
(51) Int. Cl.: C09C 1/04, C09C 1/22, C09C 1/24, C08K 3/00, C08K 3/22, C09C 3/06, C08K 9/04, C09C 3/08, C08K 3/24

(54) **BESCHICHTETE PIGMENTE ZUR EINFÄRBUNG VON PVC**
COATED PIGMENTS FOR THE COLOURING OF PVC
PIGMENTS REVÊTUS POUR LA COLORATION DE PVC

(30) Priorität: 18.06.2014 EP 14173003
(43) Veröffentlichungstag der Anmeldung: 26.04.2017
(73) Patentinhaber: LANXESS Deutschland GmbH, 50569 Köln (DE)
(72) Erfinder: CHLOPEK, Krzysztof, 47804 Krefeld (DE)
(86) Internationale Anmeldenummer: PCT/EP2015/063630
(87) Internationale Veröffentlichungsnummer: WO 2015/193390

(56) Entgegenhaltungen:
- EP-A2- 0 799 865
- EP-B1- 3 158 006
- WO-A1-2014/091008
- US-A- 4 710 375
- US-A- 4 710 375

## Beschreibung

Die vorliegende Erfindung betrifft Pigmente enthaltend zumindest eine anorganische Verbindung ausgewählt aus der Gruppe Eisenoxide, Eisenoxidhydroxide, Zinkferrite, Zinkoxide, Magnesiumferrite und Manganferrite, wobei die zumindest eine anorganische Verbindung mit einer Beschichtung ausgestattet ist, enthaltend zumindest ein Hydroxid oder Oxid von Magnesium oder Calcium und zumindest ein Fettsäuresalz, Verfahren zu deren Herstellung, deren Verwendung zur Einfärbung von Polyvinylchlorid (PVC) sowie Verfahren zur Einfärbung von PVC und mit solchen Pigmenten eingefärbtes PVC, sowie Kunststoffprodukte enthaltend solche Pigmente.

PVC wird überwiegend als Grundstoff zum Beispiel für Fensterprofile, Rohre, Fußbodenbeläge und Dachbahnen im Bausektor eingesetzt. Hart- und Weichfolien werden ebenfalls aus PVC hergestellt. PVC wird auch oft als Isolationsmaterial für Elektro-Kabel, und für Elektro-Schalterdosen, Einziehrohre für Kabel, Kabelkanäle oder Kabelabdeckungen verwendet.

PVC gehört zu der Gruppe der amorphen thermoplastischen Kunststoffe. Der Kunststoff ist typischerweise hart und spröde und wird üblicherweise durch die Zugabe von Weichmachern und Stabilisatoren für die unterschiedlichen Anwendungen angepasst.

PVC wird typischerweise mit unterschiedlichen Gehalten an Weichmachern verwendet. PVC mit einem Gehalt an Weichmachern von 0 bis 12% wird auch Hart-PVC genannt. PVC mit einem Gehalt an Weichmachern von mehr als 12% wird auch Weich-PVC genannt (Römpp Chemielexikon, Online Version 3.28, letzte Aktualisierung des Artikels: Dezember 2009, Dokumentkennung: RD-16-03650). In der Regel werden Weichmacher-Gehalte in Gewichtsprozent angegeben.

PVC wird häufig mit organischen und anorganischen Pigmenten eingefärbt. Als organische Pigmente werden z. B. Isoindole, Naphthol AS, Kupferphthalocyanin-Pigmente oder Monoazo-Calcium-Salze eingesetzt. Aus der Gruppe der anorganischen Pigmente werden häufig Mischphasen-Metalloxid-Pigmente, wie Nickel-Rutil-Pigmente, Chrom-Rutil-Pigmente, Eisen-Chromite, inverse Cobalt- bzw. Kupfer-Spinelle oder Eisen-Cobalt-Chromit-Spinelle eingesetzt. Diese Pigmente sind sehr wetter- und lichtstabil, haben jedoch den Nachteil, dass sie mehrfach teurer sind als andere eisenhaltige anorganische Pigmente.

Auch die Einfärbung von PVC mit anorganischen Pigmenten wie Eisenoxide oder Eisenoxidhydroxide, Zink-, Magnesium- oder Manganferrite ist bekannt. Eisenoxide und Eisenoxidhydroxide zeichnen sich als besonders lichtechte Pigmente aus, die über eine lange Zeit auch bei unterschiedlichsten Witterungsbedingungen eine konstante Farbe aufweisen. Allerdings treten bei der Einfärbung von PVC mit Eisenoxiden oder Eisenoxidhydroxiden, Zinkoxiden, Zink-, Magnesium- oder Manganferriten nach dem Stand der Technik sowohl bei der Verarbeitung bei den erforderlichen hohen Temperaturen als auch beim Aussetzen des geformten Kunststoffes an Licht, UV-Licht oder Wärme homogene oder inhomogene Verfärbungen des Produktes auf. Dieses ungewünschte Phänomen ist bei Hart-PVC deutlich gravierender, da Produkte aus Hart-PVC häufig in Außenbereichen eingesetzt werden, in denen witterungsbedingte Einflüsse natürlich intensiver sind. Bei Produkten aus Weich-PVC, die überwiegend in Innenbereichen eingesetzt werden, treten solche Verfärbungen gelegentlich ebenfalls auf, z.B. kurz nach der Verarbeitung. Diese negativen Effekte sind bereits seit langem bekannt und sind beispielsweise in S.S. Lele, J. Vinyl Tech. 1984, Vol. 6, No.2, S. 77 bis 81 oder P.Carty et al., Polymer 1992, Vol. 33, No. 13, S. 2704-2708 beschrieben.

Die DE 3539306 A1 beschreibt hitzebeständige Gelbpigmente, die mit Aluminiumphosphathydroxiden der allgemeinen Formel [AlO]ₓPO₄[OH]ₓ₋₃. beschichtet wurden, zur Einfärbung von thermoplastischen Kunststoffen. Eigene Versuche haben jedoch gezeigt, dass mit diesen beschichteten Pigmenten eingefärbtes PVC keine hinreichend höhere thermische Stabilität aufweist als das mit dem unbeschichteten Pigment eingefärbtes PVC. Eigene Versuche haben auch gezeigt, dass PVC, das durch mit anderen anorganischen Aluminiumverbindungen, z.B. Aluminiumoxid bzw. Aluminiumhydroxid oder Magnesiumphosphat beschichtete Eisenoxide eingefärbt ist, ebenfalls keine höhere thermische Stabilität aufweist als PVC, das durch unbeschichtete Eisenoxide eingefärbt ist.

Die EP799865A2 beschreibt Titan- und/oder Eisenoxide, die mit einer Metalloxidschicht, vorzugsweise MgO oder CaO versehen sind für bessere Eigenschaften wie Stabilität, Verblassen, Pulverisierung und insbesondere den Screening Effect insbesondere für Kosmetik-Anwendungen.

Die US4710375A beschreibt eine Kombination von Pigmenten mit anorganischem Kern einer äußeren Hülle bestehend aus einer metallischen Seife ebenfalls für kosmetische Anwendungen.

Daher bestand die Aufgabe der vorliegenden Erfindung darin, Pigmente enthaltend zumindest eine anorganische Verbindung ausgewählt aus der Gruppe Eisenoxide, Eisenoxidhydroxide, Zinkferrite, Zinkoxide, Magnesiumferrite und Manganferrite bereitzustellen, die nicht zu ungewünschten homogenen oder inhomogenen Verfärbungen des damit eingefärbtem PVC, sowohl in Form von Kunststoffprodukten als auch von daraus hergestellten Produkten, führen.

Überraschenderweise wurde nun gefunden, dass
Pigmente gemäß Anspruch 1 diese Aufgabe lösen und die oben beschriebenen Nachteile der Pigmente des Standes der Technik überwinden.

Als Eisenoxide enthalten die Pigmente beispielsweise Hämatit (Eisenoxid Rot, α-Fe₂O₃), Maghemit (braunes Eisenoxid, γ-Fe₂O₃) oder Magnetit (Eisenoxid Schwarz, Fe₃O₄), bevorzugt Hämatit (Eisenoxid Rot, α-Fe₂O₃).

Aus der Gruppe der Eisenoxidhydroxide enthalten die Pigmente z.B. Goethit (Eisenoxid Gelb, α-FeOOH) oder Lepidocrocit (y-FeOOH).

Zinkferrite, Magnesiumferrite und Manganferrite gehören zu der Gruppe der Mischphasenpigmente der allgemeinen Formel MₓFe₃₋ₓO₄, wobei M für Zn, Mg oder Mn steht, und x Werte größer 0 und kleiner als oder gleich 1 umfasst. Das Pigment kann auch ein oder mehrere unterschiedliche der vorgenannten Mischphasenpigmente enthalten.

Zinkoxid im Sinne der Erfindung ist ZnO.

Bevorzugt enthält das Pigment nur eine anorganische Verbindung ausgewählt aus der Gruppe der Eisenoxide, Eisenoxidhydroxide, Zinkferrite, Zinkoxide, Magnesiumferrite und Manganferrite.

Die in den erfindungsgemäßen Pigmenten enthaltene Beschichtung ist bevorzugt direkt mit der zumindest einen anorganischen Verbindung ausgewählt aus der Gruppe der Eisenoxide, Eisenoxidhydroxide, Zinkferrite, Zinkoxide, Magnesiumferrite und Manganferrite verbunden. "Direkt" bedeutet in diesem Zusammenhang, dass sich zwischen der Beschichtung und der anorganischen Verbindung ausgewählt aus der Gruppe der Eisenoxide, Eisenoxidhydroxide, Zinkferrite, Zinkoxide, Magnesiumferrite und Manganferrite keine weitere Zwischenschicht befindet. Zwischenschicht bedeutet im diesem Zusammenhang jede andere Beschichtung außer der erfindungsgemäßen Beschichtung.

Die Beschichtung kann beispielsweise über elektronenmikroskopische Aufnahmen der Pigmente nachgewiesen werden.

Die Fettsäuren der allgemeinen Formel CₙH₂ₙ₊₁COOH (I) sind gesättigte Fettsäuren. Bevorzugt sind die Calciumsalze und/oder Magnesiumsalze der gesättigten Fettsäure Stearinsäure (n=17). Die Fettsäuren der allgemeinen Formeln CₙH₂ₙ₋₁COOH (II) sind einfach ungesättigte Fettsäuren, z.B. Ölsäure (n=17). Die Fettsäuren der allgemeinen Formeln CₙH₂ₙ₋₃COOH (III) sind zweifach ungesättigte Fettsäuren, z.B. Linolsäure (n=17). Die Fettsäuren der allgemeinen Formeln CnH₂ₙ₋₅COOH (IV) sind dreifach ungesättigte Fettsäuren, z.B. Calendulasäure (n=17). Calciumstearat und/oder Magnesiumstearat sind besonders bevorzugt.

Für "Calciumsalz oder Magnesiumsalz einer Fettsäure der allgemeinen Formeln (I), (II), III) und/oder (IV), wobei n von 10 bis 20, bevorzugt von 15 bis 19 ist," wird im Sinne der Erfindung "Fettsäuresalz" synonym verwendet.

Die erfindungsgemäßen Pigmente enthalten bevorzugt von 0,3 bis 30 Gew.%, besonders bevorzugt von 0,5 bis 25 Gew.%, ganz besonders bevorzugt von 1 bis 20 Gew.% Magnesium und Calcium, berechnet als Summe der Gehalte der Elemente Magnesium und Calcium, wobei die Summe der Gehalte der Elemente Magnesium und Calcium auf das Gesamtgewicht des erfindungsgemäßen Pigments bezogen wird.

In einer weiteren bevorzugten Ausführungsform, die nicht Teil der Erfindung ist, enthalten die Pigmente von 0,2 bis 15 Gew.% von zumindest einem Fettsäuresalz, bevorzugt von Calciumstearat und/oder Magnesiumstearat, wobei die Gewichtsprozente das Verhältnis der Summe der Gewichte der Fettsäuresalze zum Gesamtgewicht des Pigments darstellen. Der Gehalt der Elemente Magnesium und Calcium wird, sofern nichts anderes angegeben ist, über Optische Emissionsspektrometrie nach Anregung im induktiv gekoppeltem Plasma (ICP-OES) bestimmt. Der Gehalt der Elemente Magnesium und Calcium kann auch über andere quantitative Messmethoden, z.B. mit Atomabsorptionsspektrometrie (AAS) bestimmt werden.

Der Gehalt an Fettsäuresalz, bevorzugt an Calciumstearat und/oder Magnesiumstearat, in den erfindungsgemäßen Pigmenten wird beispielsweise über Nahinfrarot- (NIR) oder mittlere IR-Spektroskopie (MIR) bestimmt. Hierbei kann die Messung direkt an der Probe erfolgen. Das Vorliegen von Fettsäuresalz, bevorzugt Calciumstearat und/oder Magnesiumstearat, kann über geeignete qualitative Messmethoden, z.B. Massenspektrometrie oder NMR-Spektroskopie erfolgen. Hierzu ist gegebenenfalls eine Aufbereitung der Probe erforderlich, sodass das in der Beschichtung enthaltene Fettsäuresalz von dem Pigment abgetrennt wird. Dies erfolgt z.B. durch Lösungsmittel und/oder mit einer alkalischen flüssigen Phase, z.B. Natronlauge. In der alkalischen flüssigen Phase liegt die Fettsäure als Salz, z.B. als Natriumsalz, in gelöster Form vor und kann als freie Fettsäure nach Ansäuern in eine organische Phase extrahiert werden. Solche qualitativen und quantitativen Messmethoden von Fettsäuresalzen sind dem Fachmann bekannt und liefern nach vorher erforderlichen Kalibrierungsversuchen reproduzierbare Ergebnisse, die von der Messmethode unabhängig sind. Das zumindest eine Fettsäuresalz, bevorzugt Calciumstearat und/oder Magnesiumstearat, kann auch über Gaschromatografie/Massenspektrometrie-Kopplung (GC-MS-Kopplung) nachgewiesen werden. Das in der zu untersuchenden Probe enthaltene zumindest eine Fettsäuresalz wird hierzu mit einem Alkohol, beispielsweise Butanol, zu dem entsprechenden Alkylester umgesetzt. Dieser wird dann über GC-MS-Kopplung qualitativ und quantitativ bestimmt. Ob das zumindest eine Fettsäuresalz, bevorzugt Calciumstearat und/oder Magnesiumstearat, als weitere Beschichtung des Pigments oder als Bestandteil einer Mischung des beschichteten Pigments vorliegt, kann eindeutig durch elektronenmikroskopische Aufnahmen der zu untersuchenden Probe festgestellt werden. Im Fall einer Beschichtung kann das zumindest eine Hydroxid oder Oxid von Magnesium oder Calcium und das zumindest eine Fettsäuresalz, bevorzugt Calciumstearat und/oder Magnesiumstearat, über Rasterelektronenmikrosopkie (REM) zusammen mit energiedispersiver Röntgenanalyse (EDX) auf der Oberfläche der Pigmentteilchen detektiert werden. Im Fall einer Mischung wird das zumindest eine Hydroxid oder Oxid von Magnesium oder Calcium und/oder das zumindest eine Fettsäuresalz, bevorzugt Calciumstearat und/oder Magnesiumstearat, gerade nicht an der Oberfläche der Pigmentteilchen, sondern als separate Teilchen detektiert, die sich in den Zwischenräumen zwischen den Teilchen der anorganischen Verbindung ausgewählt aus der Gruppe der Eisenoxide, Eisenoxidhydroxide, Zinkferrite, Zinkoxide, Magnesiumferrite und Manganferrite befinden.

In einer weiteren bevorzugten Ausführungsform bestehen die erfindungsgemäßen Pigmente aus zumindest einer anorganischen Verbindung ausgewählt aus der Gruppe Eisenoxide, Eisenoxidhydroxide, Zinkferrite, Magnesiumferrite und Manganferrite, wobei das zumindest eine anorganische Pigment mit einer Beschichtung enthaltend Hydroxide und/oder Oxide von Magnesium und/oder Calcium, besonders bevorzugt enthaltend Hydroxide von Magnesium und/oder Calcium, und zusätzlich einer Beschichtung bestehend aus zumindest einem Fettsäuresalz, bevorzugt aus Calciumstearat und/oder Magnesiumstearat, ausgestattet ist.

Die Pigmente weisen typischerweise Ölzahlen zwischen 20 und 40 g Öl / 100 g Probe, bevorzugt zwischen 23 und 39 g Öl / 100 g Probe, auf.

Überraschenderweise wurde nun gefunden, dass mit den erfindungsgemäßen Pigmenten eingefärbtes PVC eine höhere thermische Stabilität aufweist als mit den entsprechenden nichtbeschichteten Pigmenten eingefärbtes PVC. Die erhöhte thermische Stabilität des mit dem erfindungsgemäßen Pigmenten gefärbten PVC kann mittels einer thermischen Behandlung mit einem Kneter gezeigt werden, wenn der zeitliche Verlauf des Drehmomentes, das an dem Kneter anliegt, und der Temperatur des gekneteten Produktes aufgezeichnet und für verschiedene Proben verglichen wird. Bei der Zersetzung des PVC tritt eine Degradierung des Polymers auf, was zu einer Verringerung der Viskosität und damit zur Abnahme des Drehmomentes, das an dem Kneter anliegt, führt.

Weiterhin kann die erhöhte thermische Stabilität des mit dem erfindungsgemäßen Pigment gefärbten PVC über die Testung von Probenkörpern im Mathis-Ofen gemessen werden. Diese Messmethode ist in der PCT/EP2013/076585 beschrieben. Die Einzelheiten zu den Messmethoden und zu deren Auswertung finden sich im Abschnitt "Beispiele und Methoden".

Die vorliegende Erfindung betrifft auch die Verwendung des erfindungsgemäßen Pigments zur Einfärbung von PVC, bevorzugt von Hart-PVC.

Die vorliegende Offenbarung betrifft auch ein Verfahren zum Einfärben von PVC, vorzugsweise Hart-PVC, mit dem Pigment. Die Einfärbung kann nach üblichen Methoden, z.B. durch Mischen, Kneten oder Extrudieren von ungefärbtem PVC mit dem Pigment in der Schmelze oder durch Schmelzen von PVC Dry-Blends, die das Pigment enthalten, erfolgen.

Die vorliegende Erfindung betrifft auch Kunststoffprodukte, für die synonym auch die Begriffe Masterbatch, Compounds oder eingefärbtes Endprodukt verwendet werden, enthaltend zumindest ein erfindungsgemäßes Pigment sowie weiterhin enthaltend zumindest ein Polymer.

Das zumindest eine Polymer ist zumindest 50 Gew.%, bevorzugt zumindest 80 Gew.% aus dem Monomer Vinylchlorid aufgebaut. Dies gilt zum einen für den Fall, dass es sich bei dem Polymer um ein PVC-Copolymer handelt, das neben Vinylchlorid auch aus anderen Monomeren, z.B. Vinylacetat oder Butylacrylat, aufgebaut ist. Dann ist das Copolymer bevorzugt zumindest zu 50 Gew.%, besonders bevorzugt zumindest zu 80 Gew.%, aus dem Monomer Vinylchlorid aufgebaut. Dies gilt zum anderen für den Fall, dass es sich bei dem Polymer um Mischungen oder Blends von verschiedenen Polymeren handelt, wovon einer der Polymeren ein PVC-Homopolymer oder ein PVC-Copolymer ist. Dann ist die Mischung oder der Blend bevorzugt zumindest zu 50 Gew.%, besonders bevorzugt zumindest zu 80 Gew.%, aus dem Monomer Vinylchlorid aufgebaut. Bevorzugt ist das Polymer PVC, besonders bevorzugt Hart-PVC.

Unter eingefärbtem PVC ist im Sinne der Erfindung ein PVC zu verstehen, bei dem das erfindungsgemäße Pigment in die Polymermatrix des Polyvinylchlorids eingelagert ist.

Compounds enthalten beispielsweise weiterhin Verarbeitungshilfsmittel, Verstärkungsmittel, Füllstoffe, Farbstoffe, weitere Pigmente und andere organische und anorganische Zusatzstoffe und ermöglichen so die Herstellung von unterschiedlichsten Formteilen durch z.B. Extrusion, Spritzguss, Kalandrieren oder Formblasen. Die Formteile entsprechen in der Regel den Endprodukten, im Zusammenhang mit dieser Erfindung Produkte genannt, z.B. Fensterrahmen, Rohre, Isolationsmaterial, Folien oder Flaschen. Zum Einfärben des PVC werden zu den Compounds Masterbatche oder direkt das Pigment zugegeben.

Das erfindungsgemäße Kunststoffprodukt enthält je nach Verwendungszweck unterschiedliche Mengen an erfindungsgemäßem Pigment.

Kunststoffprodukte aus der Gruppe der Masterbatche werden typischerweise als "Farbkonzentrate" zur Färbung von PVC oder anderen Kunststoffprodukten eingesetzt. Deshalb weisen diese Kunststoffprodukte einen relativ hohen Pigmentgehalt von 10 bis 90 Gew.%, besonders bevorzugt von 20 bis 70 Gew.% Pigment und einen Gehalt an Polymer von 10 bis 90 Gew.%, bevorzugt von 30 bis 80 Gew.%, jeweils bezogen auf das Gesamtgewicht des Kunststoffprodukts auf. In einer weiteren Ausführungsform, die nicht Teil der Erfindung ist, enthalten die Masterbatche als

Polymer Wachse, gegebenenfalls in Mischung mit PVC, oder ohne Mischung mit PVC. Als Wachse werden beispielsweise Polyethylenwachse, Fischer-Tropsch-Wachse, Mineralwachse, Montanwachse, pflanzliche Wachse und/oder tierische Wachse ausgewählt. Vorzugsweise addieren sich die vorgenannten Komponenten zu 40 bis 100 Gew.-%, besonders bevorzugt zu 70 bis 100 Gew.-%, bezogen auf das Gesamtgewicht des Kunststoffprodukts.

Liegt das Kunststoffprodukt bereits in seiner zur endgültigen Verwendung als Compound mit der gewünschten Farbe vor, beträgt der Gehalt an Pigment bevorzugt von 0,1 bis 10 Gew.%, besonders bevorzugt 0,5 bis 5 Gew.% und der Gehalt an Polymer bevorzugt von 60 bis 99,9 Gew.%, besonders bevorzugt 70 bis 99,5 Gew.%., jeweils bezogen auf das Gesamtgewicht des Kunststoffprodukts.

Die vorliegende Erfindung betrifft auch ein Verfahren gemäß Anspruch 11 zur Herstellung der erfindungsgemäßen Kunststoffprodukte durch Kneten oder Extrudieren von Polymer mit dem erfindungsgemäßen Pigment.

PVC wird erfindungsgemäß mit unterschiedlichen Gehalten an Weichmachern verwendet. PVC mit einem Gehalt an Weichmachern von 0 bis 12% wird auch Hart-PVC genannt. PVC mit einem Gehalt an Weichmachern von mehr als 12% wird auch Weich-PVC genannt (Römpp Chemielexikon, Online Version 3.28, letzte Aktualisierung des Artikels: Dezember 2009, Dokumentkennung: RD-16-03650).

Die Erfindung betrifft auch ein Kunststoffprodukt enthaltend von 0 bis 15 Gew.%, bevorzugt von 0 bis 12 Gew.%, Weichmacher bezogen auf die im Kunststoffprodukt enthaltene Menge an Polymer.

Geeignete Weichmacher sind z.B. Primär-, Sekundärweichmacher und Extender. Primärweichmacher sind z.B. Phthalsäureester, Trimellithsäureester, Phosphate und Polymerweichmacher. Sekundärweichmacher sind z.B. Adipate, Azelate, Decandisäureester und Alkylfettsäureester. Unter die Gruppe der Extender fallen z.B. aromatische Kohlenwasserstoffe und Chlorparaffine (aus Römpp Chemielexikon, Online Version 3.2.8, letzte Aktualisierung des Artikels: März 2006, Dokumentkennung: RD-23-00480).

Die vorliegende Offenbarung betrifft auch ein Kunststoffprodukt, für das auch der Begriff "PVC Dry-Blend" verwendet wird, enthaltend eine Mischung aus pulverförmigem Polymer, vorzugsweise PVC, besonders bevorzugt Hart-PVC und erfindungsgemäßem Pigment. Solche PVC Dry-Blends können weiterhin auch die für die Herstellung von Compounds erforderlichen Zuschlagstoffe (z.B. Füllstoffe, Stabilisatoren, gegebenenfalls weitere Weichmacher, Farbstoffe, gegebenenfalls weitere Pigmente) enthalten. Diese können entweder in Substanz neben dem oder bereits eingearbeitet in das PVC des Dry-Blends vorliegen. Dry-Blends werden typischerweise durch intensives Mischen seiner oben beschriebenen Bestandteile zwischen 0,5 und 20 K unter dem Schmelzpunkt des Kunststoffes hergestellt. Aus den Dry-Blends können durch die für PVC üblichen Verarbeitungsmethoden wie Extrusion, Spritzguss, Kalandrieren oder Formblasen die Produkte hergestellt werden.

Die vorliegende Erfindung betrifft auch ein Produkt, für das synonym im Zusammenhang mit dieser Erfindung auch die Begriffe Formteil oder Fertiggut verwendet werden, enthaltend mindestens ein erfindungsgemäßes Kunststoffprodukt. Solche Produkte sind z.B. Fensterprofile, Rohre, Fußbodenbeläge, Isoliermaterial oder Dachbahnen.

Die vorliegende Erfindung betrifft auch ein Verfahren gemäß Anspruch 8 zur Herstellung der erfindungsgemäßen Pigmente.

Für die Herstellung des erfindungsgemäßen Pigments, in dem die Beschichtung aus zumindest einem Hydroxid oder Oxid von Magnesium oder Calcium die innere Schicht ist, umfasst das erfindungsgemäße Verfahren zumindest die Schritte
a) Bereitstellen einer wässrigen Suspension zumindest einer anorganischen Verbindung ausgewählt aus der Gruppe Eisenoxide, Eisenoxidhydroxide, Zinkferrite, Zinkoxide, Magnesiumferrite und Manganferrite,
   und
b) Auffällung der Beschichtung aus zumindest einem Hydroxid oder Oxid von Magnesium oder Calcium auf die anorganische Verbindung durch Zugabe von Magnesium- und/oder Calciumsalzen, bevorzugt in gelöster Form, zu der Suspension aus Schritt a) und danach Zugabe eines Fällungsmittels ausgewählt aus der Gruppe Alkalihydroxide, Erdalkalihydroxide und Ammoniak, bevorzugt in gelöster Form, zu der Suspension oder
b') Auffällung der Beschichtung aus zumindest einem Hydroxid oder Oxid von Magnesium oder Calcium auf die anorganische Verbindung durch Zugabe eines Fällungsmittels ausgewählt aus der Gruppe Alkalihydroxide, Erdalkalihydroxideund Ammoniak, bevorzugt in gelöster Form, zu der Suspension aus Schritt a) und danach Zugabe von Magnesium- und/oder Calciumsalzen, bevorzugt in gelöster Form, zu der Suspension,
   und
c) Aufbringung der zweiten Beschichtung enthaltend zumindest ein Calciumsalz oder Magnesiumsalz einer Fettsäure der allgemeinen Formeln (I), (II), (III) und/oder (IV), wobei n von 10 bis 20, bevorzugt von 15 bis 19 ist, bevorzugt enthaltend Calciumstearat und/oder Magnesiumstearat, durch Vermischen des Pigments aus den Schritten b) oder b') mit zumindest einem Calciumsalz und/oder Magnesiumsalz von zumindest einer Fettsäure der allgemeinen Formeln (I), (II), (III) und/oder (IV), wobei n von 10 bis 20, bevorzugt von 15 bis 19 ist, bevorzugt enthaltend Calciumstearat und/oder Magnesiumstearat, bei einer Temperatur oberhalb des Schmelzpunktes der in Schritt c) eingesetzten Fettsäuresalze,
wobei das erfindungsgemäße Pigment erhalten wird.

Das erfindungsgemäße Verfahren zur Herstellung von erfindungsgemäßem Pigment umfasst gegebenenfalls zusätzlich einen, zwei, drei oder vier der Schritte i) Isolierung des Pigments, ii) Wäsche des Pigments, iii) Trocknung des Pigments, und iv) Zerkleinerung des Pigments.

In einer Ausführungsform, die nicht Teil der Erfindung ist, sind die in Schritt a) des erfindungsgemäßen Verfahrens eingesetzten Pigmente vorzugsweise pulverförmige Pigmente oder Pasten aus Pigmenten, die direkt aus dem Pigment-Herstellungsprozess stammen. Pasten sind pigmenthaltige, wässrige Suspensionen.

In einer weiteren Ausführungsform (Schritt b") , die nicht Teil der Erfindung ist, kann die Zugabe des Fällungsmittels ausgewählt aus der Gruppe Alkalihydroxide, Erdalkalihydroxide und Ammoniak, bevorzugt in gelöster Form, und der Magnesium- und/oder Calciumsalze, bevorzugt in gelöster Form, zu einer vorgelegten Pigmentsuspension auch simultan erfolgen. Durch die alternativen Schritte b), b') oder b") wird die anorganische Verbindung mit zumindest einem Hydroxid oder Oxid von Magnesium oder Calcium beschichtet. In dieser Ausführungsform erfolgt nach Schritt b") erfindungsgemäß in Schritt c) die Aufbringung der zweiten Beschichtung enthaltend zumindest ein Calciumsalz oder Magnesiumsalz einer Fettsäure gemäß der allgemeinen Formeln (I), (II), (III) und/oder (IV), bevorzugt enthaltend Calciumstearat und/oder Magnesiumstearat, auf das Pigment aus Schritt b").

In einer Ausführungsform des Verfahrens, die nicht Teil der Erfindung ist, sind besonders bevorzugten Fällungsmittel Natriumhydroxid und/oder Kaliumhydroxid.

Bei den Ausfüthrungsformen gemäß der Schritte b), b') oder b") werden bevorzugt Magnesium- und/oder Calciumsalze, besonders bevorzugt deren wässrige Lösungen, ganz besonders bevorzugt Magnesiumsulfat, Magnesiumchlorid, Magnesiumnitrat, Calciumchlorid, und/oder Calciumnitrat eingesetzt.

Während der Auffällung der Beschichtung aus zumindest einem Hydroxid oder Oxid von Magnesium oder Calcium auf die anorganische Verbindung und gegebenenfalls während der Nachreaktion wird bevorzugt eine Temperatur von 10 bis 99°C, besonders bevorzugt von 20 bis 85°C, ganz besonders bevorzugt von 20 bis 70°C gewählt.

Die Zeit, während der entweder das Fällungsmittel oder die Magnesium- und/oder Calciumsalze zu der Reaktionsmischung zugegeben werden, kann innerhalb von breiten Werten schwanken.

Bevorzugt erfolgt eine Mischung der Reaktionskomponenten in den Schritten b), b') oder b"), besonders bevorzugt durch statische oder dynamische Mischer. Hierzu werden zum Beispiel Rührer, Propeller, Schaufeln, und /oder Pumpen eingesetzt.

Das Reaktionsgemisch aus den Schritten b), b') oder b") wird nach der Zugabe der Komponenten gegebenenfalls noch weiter durchmischt, um die Auffällung der Hydroxide und/oder Oxide von Magnesium und/oder Calcium auf die anorganische Verbindung möglichst vollständig verlaufen zu lassen. Die Zeit für die Nachreaktion ist abhängig von der Größe des Reaktionsansatzes. Zu Überprüfung der Vollständigkeit der Reaktion können in zeitlichen Intervallen Proben gezogen werden, die auf den Magnesium- und/oder Calciumgehalt untersucht werden. Wird der erwartete Magnesium- und/oder Calciumgehalt erreicht, ist die Reaktion beendet.

In einer Ausführungsform, die nicht Teil der Erfindung ist, wird in Schritt c) während der Beschichtung mit Calciumsalzen und/oder Magnesiumsalzen von Fettsäuren gemäß der allgemeinen Formeln (I), (II), (III) und/oder (IV), bevorzugt mit Calciumstearat und/oder Magnesiumstearat, auf das Pigment und gegebenenfalls während der Nachreaktion bevorzugt eine Temperatur oberhalb von 80°C, bevorzugt von 90°C bis 200°C, gewählt. In einer bevorzugten Ausführungsform werden die Schritte i), ii), iii) und iv) nach dem Schritt b), b') oder b") durchgeführt, sodass ein getrocknetes und zerkleinertes Pigment erhalten wird, das nachfolgend in Schritt c) des Verfahrens eingesetzt wird. Bevorzugt erfolgt eine Mischung der Reaktionskomponenten in Schritt c) durch beheizbare Mischer, besonders bevorzugt durch Henschel-Mischer. Schritt c) erfolgt typischerweise bei Drehzahlen von 300 bis 2500 Umdrehungen pro Minute, bevorzugt von 500 bis 1500 Umdrehungen pro Minute (rpm).

Das Reaktionsgemisch aus Schritt c) wird nach der Zugabe der Komponenten gegebenenfalls noch weiter durchmischt, um die Beschichtung enthaltend zumindest ein Fettsäuresalz, bevorzugt enthaltend Magnesiumstearat und/oder Calciumstearat, vollständig verlaufen zu lassen. Die Zeit für die Nachreaktion ist abhängig von der Größe des Reaktionsansatzes. Zu Überprüfung der Vollständigkeit der Reaktion können in zeitlichen Intervallen Proben gezogen werden, die auf den Gehalt an Fettsäuresalz, bevorzugt enthaltend Magnesiumstearat und/oder Calciumstearat, untersucht werden. Wird der erwartete Gehalt an Magnesiumstearat und/oder Calciumstearat erreicht, ist die Reaktion beendet. Das nach Schritt c) erhaltene Produkt ist typischerweise wie das in Schritt a) eingesetzte Pigment pulverförmig und bedarf daher keiner weiterer Aufarbeitungsschritte.

Die zusätzliche Beschichtung enthaltend zumindest ein Fettsäuresalz kann auch über Nassverfahren realisiert werden. Beispielsweise kann zu einer wässriger Suspension von dem bereits mit Magnesiumhydroxid beschichtetem Pigment unter Rühren Natriumstearat-Lösung zugegeben werden. Anschließend wird durch Zugabe von Calciumsalz- bzw. Magnesiumsalz-Lösung (z. B. Calciumnitrat oder Magnesiumsulfat) unter Rühren eine Fällreaktion durchgeführt, bei der die zweite Beschichtung des mit Magnesiumhydroxid beschichtetem Pigments mit Calciumstearat erfolgt. Nach beendeter Reaktion wird das anorganische Pigment gegebenenfalls von der Reaktionsmischung mit üblichen Methoden, wie z.B. Filtrieren oder Zentrifugieren, abgetrennt. Der abgetrennte Feststoff wird dann gegebenenfalls mit Wasser, bevorzugt mit vollentsalztem Wasser, gewaschen, bevorzugt, bis das Filtrat nur noch eine Leitfähigkeit von kleiner als oder gleich 2000 µS/m, besonders bevorzugt von kleiner als oder gleich 1500 µS/m aufweist. Typischerweise schließen sich nach der Waschung übliche Trocknungs- und Mahlungsschritte an.

In einer weiteren bevorzugten Ausführungsform , die nicht Teil der Erfindung ist, zur Herstellung des Pigments, in der die Beschichtung aus zumindest einem Hydroxid oder Oxid von Magnesium oder Calcium die äußere Schicht ist, umfasst das das erfindungsgemäße Verfahren zumindest die Schritte
x) Aufbringung einer Beschichtung enthaltend zumindest ein Calciumsalz oder Magnesiumsalz einer Fettsäure der allgemeinen Formeln (I), (II), (III) und/oder (IV), wobei n von 10 bis 20, bevorzugt von 15 bis 19 ist, bevorzugt enthaltend Calciumstearat und/oder Magnesiumstearat, durch Vermischen der zumindest einen anorganischen Verbindung ausgewählt aus der Gruppe der Eisenoxide, Eisenoxidhydroxide, Zinkferrite, Zinkoxide, Magnesiumferrite und Manganferrite, mit zumindest einem Calciumsalz und/oder Magnesiumsalz von zumindest einer Fettsäure der allgemeinen Formeln (I), (II), (III) und/oder (IV), wobei n von 10 bis 20, bevorzugt von 15 bis 19 ist, bevorzugt enthaltend Calciumstearat und/oder Magnesiumstearat, bei einer Temperatur oberhalb des Schmelzpunktes der in Schritt c) eingesetzten Fettsäuresalze, und
y) Herstellen einer wässrigen Suspension des Produkts aus Schritt x), und z') Auffällung der Beschichtung aus zumindest einem Hydroxid oder Oxid von Magnesium oder Calcium auf das in der wässrigen Suspension befindliche Produkt aus Schritt x) durch Zugabe von Magnesium- und/oder Calciumsalzen, bevorzugt in gelöster Form, zu der Suspension aus Schritt y) und danach Zugabe eines Fällungsmittels ausgewählt aus der Gruppe Alkalihydroxide, Erdalkalihydroxide und Ammoniak, bevorzugt in gelöster Form, zu der Suspension
   oder
z") Auffällung der Beschichtung aus zumindest einem Hydroxid oder Oxid von Magnesium oder Calcium auf das in der wässrigen Suspension befindliche Produkt aus Schritt x) durch Zugabe eines Fällungsmittels ausgewählt aus der Gruppe Alkalihydroxide, Erdalkalihydroxide und Ammoniak, bevorzugt in gelöster Form, zu der Suspension aus Schritt y) und danach Zugabe von Magnesium- und/oder Calciumsalzen, bevorzugt in gelöster Form, zu der Suspension,
wobei das Pigment erhalten wird.

Alternativ kann die organische Beschichtung auch auf folgende Weise realisiert werden. Zu einer wässrigen Pigmentsuspension wird Magnesiumsulfat in solche einer Menge zugegeben, dass die Menge für die erste Magnesiumhydroxid-Schicht und die zweite Magnesiumstearat-Schicht ausreicht. Danach wird entsprechende Menge von Natronlauge unter Rühren zugetropft, die zur Bildung einer Magnesiumhydroxid-Schicht auf der Pigmentoberfläche führt. Anschließend wird unter Rühren eine definierte Menge von Natriumstearat-Lösung zugegeben, die zur Fällreaktion von Magnesiumstearat aus dem in der Lösung befindlichen Magnesiumsulfat führt. Nach beendeter Reaktion wird das anorganische Pigment gegebenenfalls von der Reaktionsmischung mit üblichen Methoden, wie z.B. Filtrieren oder Zentrifugieren, abgetrennt. Der abgetrennte Feststoff wird dann gegebenenfalls mit Wasser, bevorzugt mit vollentsalztem Wasser, gewaschen, bevorzugt, bis das Filtrat nur noch eine Leitfähigkeit von kleiner als oder gleich 2000 µS/m, besonders bevorzugt von kleiner als oder gleich 1500 µS/m aufweist. Typischerweise schließen sich nach der Waschung übliche Trocknungs- und Mahlungsschritte an.

Die Trocknung des Pigments gemäß den erfindungsgemäßen Verfahren findet typischerweise bei Temperaturen von 80 bis 200°C statt, gegebenenfalls unter geringerem Druck als Umgebungsdruck.

In Verfahren zur Herstellung von Pigmenten werden teilweise Kalzinierungsschritte eingesetzt. Unter Kalzinierung wird eine thermische Behandlung eines festen oder halbfeuchten Pigments bei Temperaturen von größer als 600°C verstanden. Dies ist gegebenenfalls erforderlich, wenn Pigmente entwässert oder in andere Modifikationen umgewandelt werden sollen. In dem erfindungsgemäßen Verfahren ist ein Kalzinierungsschritt nicht erforderlich. In einer bevorzugten Ausführungsform des erfindungsgemäßen Verfahrens ist daher ein Kalzinierungsschritt ausgeschlossen. In einer besonders bevorzugten Ausführungsform des erfindungsgemäßen Verfahrens ist daher ein Kalzinierungsschritt bei Temperaturen von größer als 600°C ausgeschlossen.

Die erfindungsgemäßen Pigmente stellen eine Verbesserung des Standes der Technik dar, da Kunststoffprodukte und Produkte aus PVC, die mit den erfindungsgemäßen beschichteten Pigmenten eingefärbt sind, eine hohe thermische Stabilität und/oder UV-Stabilität aufweisen.

### Beispiele und Methoden

### I. Beschreibung der verwendeten Mess- und Prüfmethoden

Die Ergebnisse der Messungen zu den Beispielen sind in Tabelle 1 zusammengefasst.

### I.1 Mg- und Ca-Bestimmung

Der Magnesium- und Calciumgehalt der Pigmente wurde über Optische Emissionsspektrometrie nach Anregung im induktiv gekoppeltem Plasma (ICP-OES: inductively coupled plasma-optical emission spectrometry) als Gehalt der Elemente gemessen.

### I.2 Ölzahl

Die Ölzahl wurde gemäß der Norm DIN ISO 787/5 in g Öl/100 g Probe gemessen. Mit Probe ist entweder das unbeschichtete Pigment oder das erfindungsgemäße Pigment gemeint.

### I.3 Abtestung der PVC-Stabilität mittels Kneter Thermo Haake Rheomix 600p (Kneter-Stabilität)

Eine pulverförmige PVC-Mischung bestehend aus 50 Gew. % Vestolit B 7021 Ultra + 50 Gew. % SorVyl DB 6668 Natur 3/03 wird mit der zu testenden pulverförmigen Pigmentprobe (4 Gew. % bezogen auf 100% PVC- Zusammensetzung) homogen vermischt.

Eine pulverförmige PVC-Mischung bestehend aus 50 Gew. % Vestolit B 7021 Ultra + 50 Gew. % SorVyl DB 6668 Natur 3/03 wird mit der zu testenden pulverförmigen Pigmentprobe (4 Gew. % bezogen auf 100% PVC- Zusammensetzung) oder der zu testenden Mischung homogen vermischt.

Die pigmentierte PVC-Mischung wird in dem auf 190°C vorgeheizten Messkneter (Thermo Haake Rheomix 600p mit Walzenrotoren R6), der mit einem Rotationsrheometer ausgerüstet ist, händisch eingefüllt. Das Messprogramm (PolyLab Monitor) wird gestartet und zeichnet den zeitlichen Verlauf des Drehmomentes, das an den Walzenrotoren anliegt, und die Temperatur der Probe auf. Die pigmentierte PVC-Mischung wird bei 190°C und 50 rpm geknetet. Um die Eignung des beschichteten Pigments bezüglich der Stabilisierung von PVC zu bestimmen, wird das Maximum des Drehmoments auf der Zeitachse in Minuten angegeben, bei dem die höchste Produkttemperatur gemessen wurde. Nach diesem Maximum des Drehmomentes fällt das Drehmoment stark ab, da sich nach dieser Zeit das PVC in zunehmenden Maß zersetzt und dadurch die Viskosität des gekneteten Produktes verringert. Diese Werte werden mit dem entsprechenden Wert des gleichen, aber nicht beschichtetem Pigmentpulver verglichen. Je länger die Zeitdauer bis zum genannten Maximum ist, desto höher ist die Stabilität des mit dem beschichtetem Pigment eingefärbten PVC.

### II: Beispiele

### II.1 Eigenschaften der verwendeten anorganischen Pigmente und Kunststoffe

**Bayferrox^{®} 110** Pigmentpulver der Fa. LANXESS Deutschland GmbH: Hämatit (rotes Eisenoxid, α-Fe2O3) mit einer BET-Oberfläche nach DIN ISO 9277 von 13-16 m²/g.

**Bayferrox^{®} 920:** Goethit, α-FeOOH-Paste der Firma LANXESS Deutschland GmbH, aus der durch Trocknung und Mahlung Bayferrox^{®} 920 Pulver produziert wird. Das pulverförmige Pigment weist eine BET-Oberfläche nach DIN ISO 9277 von 11-15 m²/g auf. Alternativ kann auch das pulverförmige Pigment Bayferrox^{®} 920 mit Wasser auf die entsprechende Pigmentkonzentration (s. Beispiele) angemaischt werden.

**Calciumstearat:** Pulver der Fa. VWR BDH PROLABO^{®} mit Ca-Gehalt zwischen 9 bis 11 Gew.% (als CaO berechnet).

**SorVyl DB 6668 Natur 3/03:** Hart-PVC-Compound der Fa. Polymerchemie (Pulverform, stabilisiert mit Ca/Zn, wobei der Gehalt an Bis(pentan-2,4-dionato)calcium unter 1 Gew.% liegt, mit Erweichungspunkt >120°C, Flammpunkt > 190°C, Zündtemperatur > 300°C, Dichte nach DIN EN ISO 1183-1, Verfahren A von 1,39 g/cm³, Schüttdichte nach DIN EN ISO 60 von 0,54 g/ml, Thermostabilität nach DIN EN 60811-3-2 von größer/gleich 25 Min.).

**VESTOLIT^{®} B 7021 Ultra:** Homopolymer Mikro-S-PVC der Fa. Vestolit (Pulverform, K-Wert nach DIN EN ISO 1628-2 von 70, Viskositätszahl nach DIN EN ISO 1628-2 von 125 cm³/g, Schüttdichte nach DIN EN ISO 60 von 0,3 von g/cm³, Siebanalyse - Rückstand auf 0,063 mm-Sieb nach DIN EN ISO 1624 von < 1%, Wassergehalt nach K. Fischer DIN 53 715 von ≤ 0,3%, pH-Wert des wässrigen Auszuges nach DIN EN ISO 1264 von 8, Pastenviskosität 1,5/s von 1,8 Pa s, Pastenviskosität 45/s von 2,2 Pa s).

### II.2 Erfindungsgemäße Beispiele und Vergleichsbeispiele

### Beispiel 1 (Vergleichsbeispiel)

Zu dem Henschelmischer Typ FM4 wurden 145,5 g Pigment Bayferrox^{®} 110 und 4,5 g Calciumstearat zugegeben. Beide Substanzen wurden bei 161°C 20 Min. miteinander bei 1000 rpm gemischt. Das pulverförmige Produkt wird ohne weitere Behandlung für die Abtestung eingesetzt.

### Beispiel 2 (Vergleichsbeispiel)

Zu dem Henschelmischer Typ FM4 wurden 141 g Pigment Bayferrox^{®} 110 und 9 g Calciumstearat zugegeben. Beide Substanzen wurden bei 164°C 20 Min. lang miteinander bei 1000 rpm gemischt. Das pulverförmige Produkt wird ohne weitere Behandlung für die Abtestung eingesetzt.

### Ausgangsmaterial 1 für Beispiele 3 und 4

Zu 3,3dm³ wässriger Suspension von Bayferrox^{®} 110 (6,26 mol Fe₂O₃) mit einem pH-Wert von 4,9 wurden bei 60°C unter Rühren 1923 mL einer MgSO₄₋Lösung (2,58 mol/dm³ als MgO) zugegeben. Anschließend wurden pro mol Fe₂O₃ unter Rühren 5,12 mol NaOH als Lösung innerhalb von 30 Min. zugetropft (2850 g mit Konzentration 16,6 mol/dm³). Die Suspension wurde 60 Min. nachgerührt. Der pH-Wert der Suspension lag bei > 11. Das Pigment wurde nach beendeter Reaktion über eine Nutsche filtriert, gewaschen, bis die Leitfähigkeit des Filtrates unter 300 µS/cm betrug, im Trockenschrank bei 120°C bis zur Gewichtskonstanz getrocknet und auf einer Bauermeister-Mühle (Schlagkreuz-Mühle mit einem Siebeinsatz, Maschenweite 1 mm) gemahlen.

### Beispiel 3 (erfindungsgemäß)

Zu dem Henschelmischer Typ FM4 wurden 145,5 g Pigment (Ausgangsmaterial 1) und 4,5 g Calciumstearat zugegeben. Beide Substanzen wurden bei 162°C 20 Min. miteinander bei 1000 rpm gemischt. Das pulverförmige Produkt wird ohne weitere Behandlung für die Abtestung eingesetzt.

### Beispiel 4 (erfindungsgemäß)

Zu dem Henschelmischer Typ FM4 wurden 141 g Pigment (Ausgangsmaterial 2) und 9 g Calciumstearat zugegeben. Beide Substanzen wurden bei 165°C 20 Min. lang miteinander bei 1000 rpm gemischt. Das pulverförmige Produkt wird ohne weitere Behandlung für die Abtestung eingesetzt.

Die Eigenschaften der Produkte sind in der Tabelle 1 zusammengefasst.

**Tabelle 1**

| **Beispiel** | **Mg-Gehalt (Gew. %)** | **Calciumstearat Gehalt (Gew.%)** | **Ölzahl (g ÖI/100 g Probe)** | **Kneterstabilität (Min.)** |
|---|---|---|---|---|
| Bayferrox ^{®} 110 ^{a)} | 0,01 | 0 | 24,8 | 14 |
| 1 | 0,01 | 3 | 24,8 | 14 |
| 2 | 0,01 | 6 | 23,6 | 14 |
| 3 | 10,5 | 3 | 33,1 | 19 |
| 4 | 10,2 | 6 | 29,4 | 20 |

| | | | | |
|---|---|---|---|---|
| a): unbeschichtetes Pigment als direkter Vergleich zu Beispielen 1 bis 4 | | | | |

## Patentansprüche

1. Pigment enthaltend zumindest eine anorganische Verbindung ausgewählt aus der Gruppe der Eisenoxide, Eisenoxidhydroxide, Zinkferrite, Zinkoxide, Magnesiumferrite und Manganferrite, wobei die zumindest eine anorganische Verbindung mit einer Beschichtung ausgestattet ist, enthaltend zumindest
• zumindest ein Hydroxid oder Oxid von Magnesium oder Calcium und
• zumindest ein Calciumsalz oder Magnesiumsalz einer Fettsäure der allgemeinen Formeln CₙH₂ₙ₊₁COOH (I), CₙH₂ₙ₋₁COOH (II), CₙH₂ₙ₋₃COOH (III) und/oder CₙH₂ₙ₋₅COOH (IV), wobei n von 10 bis 20 ist,
wobei die Beschichtung der zumindest einen anorganischen Verbindung aus einer äußeren und einer inneren Schicht besteht, wobei
A) eine der beiden Schichten zumindest ein Hydroxid oder Oxid von Magnesium oder Calcium und
B) die andere der beiden Schichten zumindest ein Calciumsalz oder Magnesiumsalz einer Fettsäure der allgemeinen Formeln CₙH₂ₙ₊₁COOH (I), CₙH₂ₙ₋₁COOH (II), CₙH₂ₙ₋₃COOH (III) und/oder CₙH₂ₙ₋₅COOH (IV), wobei n von 10 bis 20 ist, enthält, wobei die Schicht gemäß A) vorzugsweise die innere Schicht ist.

2. Pigment gemäß Anspruch 1, **dadurch gekennzeichnet, dass** die Beschichtung direkt mit der zumindest einen anorganischen Verbindung verbunden ist.

3. Pigment gemäß einem der Ansprüche 1 bis 2, wobei das Pigment von 0,3 bis 30 Gew.%, bevorzugt von 0,5 bis 25 Gew.%, besonders bevorzugt von 1 bis 20 Gew.% Magnesium und Calcium, berechnet als Summe der Gehalte der Elemente Magnesium und Calcium, wobei der die Summe der Gehalte der Elemente Magnesium und Calcium auf das Gesamtgewicht des Pigments bezogen wird.

4. Kunststoffprodukt enthaltend
• zumindest ein Pigment gemäß einem der Ansprüche 1 bis 3 und
• zumindest ein Polymer, wobei zumindest 50 Gew.%, bevorzugt zumindest 80 Gew.% des Polymers aus dem Monomer Vinylchlorid aufgebaut sind,
wobei sich die vorgenannten Komponenten vorzugsweise zu 40 bis 100 Gew.-%, besonders bevorzugt zu 70 bis 100 Gew.-%, bezogen auf das Gesamtgewicht des Kunststoffprodukts, addieren.

5. Kunststoffprodukt gemäß Anspruch 4 enthaltend von 10 bis 90 Gew.%, bevorzugt von 20 bis 70 Gew.% oder von 0,1 bis 10 Gew.%, bevorzugt von 0,5 bis 5 Gew.% Pigment gemäß einem der Ansprüche 1 bis 3.

6. Kunststoffprodukt gemäß einem der Ansprüche 4 oder 5 enthaltend von 0 bis 15 Gew.%, bevorzugt von 0 bis 12 Gew.% Weichmacher bezogen auf die im Kunststoffprodukt enthaltene Menge an Polymer.

7. Kunststoffprodukt gemäß einem der Ansprüche 4 bis 6, **dadurch gekennzeichnet, dass** es eine Mischung aus pulverförmigem Polymer und dem zumindest einen Pigment gemäß einem der Ansprüche 1 bis 3 ist.

8. Verfahren zur Herstellung von Pigment gemäß Anspruch 1, in dem die Beschichtung aus zumindest einem Hydroxid oder Oxid von Magnesium oder Calcium die innere Schicht ist, umfassend zumindest die Schritte
a) Bereitstellen einer wässrigen Suspension zumindest einer anorganischen Verbindung ausgewählt aus der Gruppe Eisenoxide, Eisenoxidhydroxide, Zinkferrite, Zinkoxide, Magnesiumferrite und Manganferrite,
und
b) Auffällung der Beschichtung aus zumindest einem Hydroxid oder Oxid von Magnesium oder Calcium auf die anorganische Verbindung durch Zugabe von Magnesium- und/oder Calciumsalzen, bevorzugt in gelöster Form, zu der Suspension aus Schritt a) und danach Zugabe eines Fällungsmittels ausgewählt aus der Gruppe Alkalihydroxide, Erdalkalihydroxide und Ammoniak, bevorzugt in gelöster Form, zu der Suspension oder
b') Auffällung der Beschichtung aus zumindest einem Hydroxid oder Oxid von Magnesium oder Calcium auf die anorganische Verbindung durch Zugabe eines Fällungsmittels ausgewählt aus der Gruppe Alkalihydroxide, Erdalkalihydroxide und Ammoniak, bevorzugt in gelöster Form, zu der Suspension aus Schritt a) und danach Zugabe von Magnesium- und/oder Calciumsalzen, bevorzugt in gelöster Form, zu der Suspension,
und
c) Aufbringung der Beschichtung enthaltend zumindest ein Calciumsalz oder Magnesiumsalz einer Fettsäure der allgemeinen Formeln (I), (II), (III) und/oder (IV), wobei n von 10 bis 20, bevorzugt von 15 bis 19 ist, bevorzugt enthaltend Calciumstearat und/oder Magnesiumstearat, durch Vermischen des Pigments aus den Schritten b) oder b') mit zumindest einem Calciumsalz und/oder Magnesiumsalz von zumindest einer Fettsäure der allgemeinen Formeln (I), (II), (III) und/oder (IV), wobei n von 10 bis 20, bevorzugt von 15 bis 19 ist, bevorzugt enthaltend Calciumstearat und/oder Magnesiumstearat, bei einer Temperatur oberhalb des Schmelzpunktes der in Schritt c) eingesetzten Fettsäuresalze,
wobei das Pigment erhalten wird.

9. Verfahren zur Herstellung von Pigment gemäß Anspruch 8, umfassend zusätzlich einen, zwei, drei oder vier der Schritte i) Isolierung des Pigmentes, ii) Wäsche des Pigmentes, iii) Trocknung des Pigmentes, und iv) Zerkleinerung des Pigmentes.

10. Verfahren zur Herstellung von Pigment gemäß einem der Ansprüche 8 bis 9, in dem ein Kalzinierungsschritt, bevorzugt bei Temperaturen größer als 600°C, ausgeschlossen ist.

11. Verfahren zur Herstellung der Kunststoffprodukte gemäß einem der Ansprüche 4 bis 6 durch Kneten oder Extrudieren von Polymer mit dem Pigment gemäß einem der Ansprüche 1 bis 3.

12. Verfahren zur Herstellung des Kunststoffprodukts gemäß Anspruch 7 durch Vermischung von zumindest einem Pigment gemäß einem der Ansprüche 1 bis 3 und pulverförmigem PVC, bevorzugt durch Mischen der Bestandteile zwischen 0,5 und 20 K unter dem Schmelzpunkt des Kunststoffes.

13. Verwendung des Pigments gemäß einem der Ansprüche 1 bis 3 zur Einfärbung von PVC, bevorzugt von Hart-PVC.

14. Produkt enthaltend mindestens ein Kunststoffprodukt gemäß einem der Ansprüche 4 bis 7.

15. Produkt nach Anspruch 14, wobei das Produkt Fensterprofile, Rohre, Fußbodenbeläge, Isoliermaterial oder Dachbahnen umfasst.

## Claims

1. Pigment comprising at least one inorganic compound selected from the group of the iron oxides, iron oxide hydroxides, zinc ferrites, zinc oxides, magnesium ferrites and manganese ferrites, wherein the at least one inorganic compound is equipped with a coating comprising at least
• at least one hydroxide or oxide of magnesium or calcium and
• at least one calcium salt or magnesium salt of a fatty acid of the general formulae CₙH₂ₙ₊₁COOH (I), CₙH₂ₙ₋₁COOH (II), CₙH₂ₙ₋₃COOH (III) and/or CₙH₂ₙ₋₅COOH (IV), where n is from 10 to 20,
wherein the coating of the at least one inorganic compound consists of an outer layer and an inner layer, wherein
A) one of the two layers comprises at least one hydroxide or oxide of magnesium or calcium and
B) the other of the two layers comprises at least one calcium salt or magnesium salt of a fatty acid of the general formulae CₙH₂ₙ₊₁COOH (I), CₙH₂ₙ₋₁COOH (II), CₙH₂ₙ₋₃COOH (III) and/or CₙH₂ₙ₋₅COOH (IV), where n is from 10 to 20, wherein the layer according to A) is preferably the inner layer.

2. Pigment according to Claim 1, **characterized in that** the coating is bonded directly to the at least one inorganic compound.

3. Pigment according to either of Claims 1 and 2, wherein the pigment from 0.3% to 30% by weight, preferably from 0.5% to 25% by weight, more preferably from 1% to 20% by weight of magnesium and calcium, calculated as the sum total of the contents of the elements magnesium and calcium, where the sum total of the contents of the elements magnesium and calcium is based on the total weight of the pigment.

4. Plastics product comprising
• at least one pigment according to any of Claims 1 to 3 and
• at least one polymer, where at least 50% by weight, preferably at least 80% by weight, of the polymer is formed from the monomer vinyl chloride,
wherein the aforementioned components preferably add up to 40% to 100% by weight, more preferably to 70% to 100% by weight, based on the total weight of the plastics product.

5. Plastics product according to Claim 4, containing from 10% to 90% by weight, preferably from 20% to 70% by weight, or from 0.1% to 10% by weight, preferably from 0.5% to 5% by weight, of pigment according to any of Claims 1 to 3.

6. Plastics product according to either of Claims 4 and 5, containing from 0% to 15% by weight, preferably from 0% to 12% by weight, of plasticizer based on the amount of polymer present in the plastics product.

7. Plastics product according to any of Claims 4 to 6, **characterized in that** it is a mixture of pulverulent polymer and the at least one pigment according to any of Claims 1 to 3.

8. Process for producing pigment according to Claim 1, in which the coating composed of at least one hydroxide or oxide of magnesium or calcium is the inner layer, comprising at least the steps of
a) providing an aqueous suspension of at least one inorganic compound selected from the group of iron oxides, iron oxide hydroxides, zinc ferrites, zinc oxides, magnesium ferrites and manganese ferrites,
and
b) precipitating the coating of at least one hydroxide or oxide of magnesium or calcium onto the inorganic compound by adding magnesium salts and/or calcium salts, preferably in dissolved form, to the suspension from step a) and then adding a precipitant selected from the group of alkali metal hydroxides, alkaline earth metal hydroxides and ammonia, preferably in dissolved form, to the suspension or
b') precipitating the coating of at least one hydroxide or oxide of magnesium or calcium onto the inorganic compound by adding a precipitant selected from the group of alkali metal hydroxides, alkaline earth metal hydroxides and ammonia, preferably in dissolved form, to the suspension from step a) and then adding magnesium salts and/or calcium salts, preferably in dissolved form, to the suspension,
and
c) applying the coating comprising at least one calcium salt or magnesium salt of a fatty acid of the general formulae (I), (II), (III) and/or (IV), where n is from 10 to 20, preferably from 15 to 19, preferably comprising calcium stearate and/or magnesium stearate, by mixing the pigment from steps b) or b') with at least one calcium salt and/or magnesium salt of at least one fatty acid of the general formulae (I), (II), (III) and/or (IV), where n is from 10 to 20, preferably from 15 to 19, preferably comprising calcium stearate and/or magnesium stearate, at a temperature above the melting point of the fatty acid salts used in step c),
to obtain the pigment.

9. Process for producing pigment according to Claim 8, additionally comprising one, two, three or four of the steps of i) isolating the pigment, ii) washing the pigment, iii) drying the pigment, and iv) comminuting the pigment.

10. Process for producing pigment according to either of Claims 8 and 9, in which a calcination step, preferably at temperatures greater than 600°C, is excluded.

11. Process for producing plastics products according to any of Claims 4 to 6 by kneading or extruding polymer with pigment according to any of Claims 1 to 3.

12. Process for producing the plastics product according to Claim 7 by mixing at least one pigment according to any of Claims 1 to 3 and pulverulent PVC, preferably by mixing the constituents between 0.5 and 20 K below the melting point of the plastic.

13. Use of pigment according to any of Claims 1 to 3 for colouring PVC, preferably rigid PVC.

14. Product comprising at least one plastics product according to any of Claims 4 to 7.

15. Product according to Claim 14, wherein the product comprises window profiles, pipes, floor coverings, insulation material or roofing sheets.

## Revendications

1. Pigment contenant au moins un composé inorganique choisi dans le groupe des oxydes de fer, des oxydes-hydroxydes de fer, des ferrites de zinc, des oxydes de zinc, des ferrites de magnésium et des ferrites de manganèse, ledit au moins un composé inorganique étant pourvu d'un revêtement, contenant au moins
• au moins un hydroxyde ou un oxyde de magnésium ou de calcium et
• au moins un sel de calcium ou un sel de magnésium d'un acide gras des formules générales CₙH₂ₙ₊₁COOH (I), CₙH₂ₙ₋₁COOH (II), CₙH₂ₙ₋₃COOH (III) et/ou CₙH₂ₙ₋₅COOH (IV), n valant 10 à 20,
le revêtement dudit au moins un composé inorganique étant constitué par une couche externe et une couche interne,
A) l'une des deux couches contenant au moins un hydroxyde ou un oxyde de magnésium ou de calcium et
B) l'autre des deux couches contenant au moins un sel de calcium ou un sel de magnésium d'un acide gras des formules générales CₙH₂ₙ₊₁COOH (I), CₙH₂ₙ₋₁COOH (II), CₙH₂ₙ₋₃COOH (III) et/ou CₙH₂ₙ₋₅COOH (IV), n valant 10 à 20, la couche selon A) étant de préférence la couche interne.

2. Pigment selon la revendication 1, **caractérisé en ce que** le revêtement est relié directement audit au moins un composé inorganique.

3. Pigment selon l'une quelconque des revendications 1 à 2, le pigment 0,3 à 30% en poids, de préférence 0,5 à 25% en poids, de manière particulièrement préférée 1 à 20% en poids de magnésium et de calcium, calculés sous forme de somme des teneurs en éléments magnésium et calcium, la somme des teneurs en éléments magnésium et calcium se rapportant au poids total du pigment.

4. Produit synthétique contenant
• au moins un pigment selon l'une quelconque des revendications 1 à 3 et
• au moins un polymère, au moins 50% en poids, de préférence au moins 80% en poids du polymère étant constitués du monomère chlorure de vinyle,
la somme des composants susmentionnés valant de préférence 40 à 100% en poids, de manière particulièrement préférée 70 à 100% en poids, par rapport au poids total du produit synthétique.

5. Produit synthétique selon la revendication 4, contenant 10 à 90% en poids, de préférence 20 à 70% en poids ou 0,1 à 10% en poids, de préférence 0,5 à 5% en poids de pigment selon l'une quelconque des revendications 1 à 3.

6. Produit synthétique selon l'une quelconque des revendications 4 ou 5, contenant 0 à 15% en poids, de préférence 0 à 12% en poids de plastifiant, par rapport à la quantité de polymère contenue dans le produit synthétique.

7. Produit synthétique selon l'une quelconque des revendications 4 à 6, **caractérisé en ce qu'**il s'agit d'un mélange de polymère sous forme de poudre et dudit au moins un pigment selon l'une quelconque des revendications 1 à 3.

8. Procédé pour la préparation de pigment selon la revendication 1, dans lequel le revêtement constitué par au moins un hydroxyde ou un oxyde de magnésium ou de calcium est la couche interne, comprenant au moins les étapes
a) mise à disposition d'une suspension aqueuse d'au moins un composé inorganique choisi dans le groupe des oxydes de fer, des oxydes-hydroxydes de fer, des ferrites de zinc, des oxydes de zinc, des ferrites de magnésium et des ferrites de manganèse
et
b) précipitation du revêtement constitué par au moins un hydroxyde ou un oxyde de magnésium ou de calcium sur le composé inorganique par ajout de sels de magnésium et/ou de calcium, de préférence sous forme dissoute, à la suspension de l'étape a) et ensuite ajout d'un agent de précipitation choisi dans le groupe des hydroxydes de métal alcalin, des hydroxydes de métal alcalino-terreux et de l'ammoniaque, de préférence sous forme dissoute, à la suspension ou
b') précipitation du revêtement constitué par au moins un hydroxyde ou un oxyde de magnésium ou de calcium sur le composé inorganique par ajout d'un agent de précipitation choisi dans le groupe des hydroxydes de métal alcalin, des hydroxydes de métal alcalino-terreux et de l'ammoniaque, de préférence sous forme dissoute, à la suspension de l'étape a) et ensuite ajout de sels de magnésium et/ou de calcium, de préférence sous forme dissoute, à la suspension
et
c) application du revêtement contenant au moins un sel de calcium ou un sel de magnésium d'un acide gras des formules générales (I), (II), (III) et/ou (IV), n valant 10 à 20, de préférence 15 à 19, contenant de préférence du stéarate de calcium et/ou du stéarate de magnésium, par mélange du pigment des étapes b) ou b') avec au moins un sel de calcium et/ou un sel de magnésium d'au moins un acide gras des formules générales (I), (II), (III) et/ou (IV), n valant 10 à 20, de préférence 15 à 19, contenant de préférence du stéarate de calcium et/ou du stéarate de magnésium, à une température supérieure au point de fusion des sels d'acide gras utilisés dans l'étape c),
le pigment étant obtenu.

9. Procédé pour la préparation d'un pigment selon la revendication 8, comprenant en plus une, deux, trois ou quatre étapes parmi i) isolement du pigment, ii) lavage du pigment, iii) séchage du pigment et iv) broyage du pigment.

10. Procédé pour la préparation de pigment selon l'une quelconque des revendications 8 à 9, dans lequel une étape de calcination, de préférence à des températures supérieures à 600°C, est exclue.

11. Procédé pour la préparation des produits synthétiques selon l'une quelconque des revendications 4 à 6 par malaxage ou extrusion du polymère avec le pigment selon l'une quelconque des revendications 1 à 3.

12. Procédé pour la préparation du produit synthétique selon la revendication 7 par mélange dudit au moins un pigment selon l'une quelconque des revendications 1 à 3 et de PVC sous forme de poudre, de préférence par mélange des constituants à une température située 0,5 à 20 K au-dessous du point de fusion du matériau synthétique.

13. Utilisation du pigment selon l'une quelconque des revendications 1 à 3 pour la coloration de PVC, de préférence de PVC dur.

14. Produits contenant au moins un produit synthétique selon l'une quelconque des revendications 4 à 7.

15. Produit selon la revendication 14, le produit comprenant des profilés de fenêtres, des tuyaux, des revêtements de sol, un matériau d'isolation ou des bandes de toit.
